# FASCICULE DE BREVET EUROPEEN

(11) **EP 3 987 502 B1**
(45) Date de publication et mention de la délivrance du brevet: **11.09.2024**
(21) Numéro de dépôt: 20785786.3
(22) Date de dépôt: 19.06.2020
(51) Int. Cl.: G08G 1/14, G06Q 10/06, G06Q 10/04, G08G 1/04, G08G 1/042, G06Q 50/40

(54) **PROCÉDÉ ET SYSTÈME DE GESTION DE PLACES DE STATIONNEMENT**
VERFAHREN UND SYSTEM ZUR VERWALTUNG VON PARKPLÄTZEN
METHOD AND SYSTEM FOR MANAGING PARKING SPACES

(30) Priorité: 19.06.2019 FR 1906619
(43) Date de publication de la demande: 27.04.2022
(73) Titulaire: Vulog, 06200 Nice (FR)
(72) Inventeur: COLON, François, 13013 Marseille (FR)
(74) Mandataire: Roman, Alexis
(86) Numéro de dépôt international: PCT/FR2020/051073
(87) Numéro de publication internationale: WO 2020/254773

(56) Documents cités:
- WO-A1-2019/010580
- US-A1- 2012 299 749
- US-A1- 2016 180 712
- US-A1- 2018 374 349

## Description

### Domaine technique.

L'invention concerne un procédé et un système de gestion de place de stationnement.

Le domaine de l'invention concerne le domaine technique de la transmission d'instructions pour contrôler des places de stationnement.

### Etat de la technique.

Généralement, l'utilisation de places de stationnement - où places de parking - publiques ou privées, est basée sur le principe du premier arrivé, premier servi. Les embouteillages sont fréquents lorsque toutes les places de stationnement sont occupées dans une zone géographique et que des conducteurs sont obligés d'attendre que des places se libèrent. De plus, les conducteurs peuvent être frustrés par la recherche d'une place de stationnement et découragés de se rendre dans des zones géographiques où il est difficile de stationner.

Les documents brevets US2014/0249742, US2016/180712, US2018/0374349, US2012/0299749, US7834778, US2014/0236645, WO2016/6084041 ou WO2018/232889 décrivent différents systèmes et procédés pour gérer des réservations de places de stationnement de sorte que le conducteur soit orienté efficacement vers des places de stationnement disponibles et identifiées. Ces systèmes permettent généralement à un conducteur de réserver à l'avance une place stationnement disponible. Toutefois, si aucune place de stationnement n'est disponible au moment de la réservation, aucune réservation ne peut être effectuée.

Le document US2012/0095812 permet de résoudre en partie cet inconvénient. Ce document décrit un procédé de gestion de places de stationnement. Ces places sont associées à indicateur de temps de stationnement pilotés par un contrôleur configuré pour allouer un temps de stationnement autorisé. Ce système permet de moduler le temps de stationnement autorisé en fonction d'une réservation d'une place de stationnement. Par exemple, un conducteur souhaite réserver une place à une heure déterminée. L'indicateur peut alors afficher le temps restant jusqu'à l'heure de réservation (par exemple décompte de 60 minutes 1 heure avant la réservation), de sorte que les autres conducteurs savent le temps pendant lequel ils peuvent garer leur véhicule sur ladite place et l'heure à laquelle ils devront la libérer. Le processus permettant de moduler le temps de stationnement autorisé est ici initié par une action volontaire du conducteur, à savoir la réservation effective d'une place de stationnement. Cette réservation préalable est l'élément déclencheur du processus de modulation. Un conducteur n'ayant pas fait de réservation préalable, ne peut donc pas être assuré de trouver une place de stationnement.

Un objectif de l'invention est de remédier à cet état des choses. Un autre objectif de l'invention est de permettre à des conducteurs de trouver efficacement des places de stationnement disponibles, même en l'absence de toute réservation préalable. Encore un autre objectif de l'invention est de rendre des places de stationnement disponibles afin de réduire les embouteillages dans les rues et d'améliorer l'expérience de conducteurs souhaitant se garer.

### Présentation de l'invention.

La solution proposée par l'invention est un procédé de gestion de places de stationnement pour véhicules, lesquelles places sont localisées dans une zone géographique et sont associées à un contrôleur configuré pour allouer une ou plusieurs caractéristiques de stationnement auxdites places. Le procédé comporte les étapes suivantes:
- récolte et stockage de données historiques de navigation de véhicules identifiés et/ou de conducteurs identifiés,
- analyse statistique desdites données stockées pour prédire l'utilisation des places par les véhicules identifiés et/ou les conducteurs identifiés,
- modification d'une ou plusieurs caractéristiques de stationnement allouées par le contrôleur en fonction de la prédiction d'utilisation des places.

La modification des caractéristiques de stationnement des places intervient au moment où un conducteur/véhicule identifié est potentiellement censé arriver dans une zone géographique. Le processus n'est plus initié par une action préalable du conducteur, mais par le résultat d'une analyse statistique. Cette dernière est basée sur des observations de navigation à partir desquelles est établit des hypothèses plausibles permettant de prédire l'utilisation de places, par des véhicules identifiés et/ou des conducteurs identifiés, à partir d'une heure d'arrivée, et dans une zone géographique déterminée. Cette gestion dynamique des places permet d'augmenter l'offre de sorte qu'un conducteur n'a plus besoin de faire une réservation préalable d'une place de stationnement pour trouver à se garer. Il est quasiment assuré de trouver une place libre à son arriver dans la zone géographique. Les embouteillages dans les rues sont de fait réduit et l'expérience du conducteur améliorée.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires:
- Selon un mode de réalisation, le procédé comprend les étapes suivantes : - récolte et stockage de données historiques d'occupation des places ; - détermination d'un nombre de places libres faisant suite à la prédiction d'utilisation des places ; - calcul d'un taux d'occupation desdites places libres, lequel calcul est basé sur une analyse statistique desdites données historiques stockées.
- Selon un mode de réalisation, le procédé comprend une étape de sélection d'au moins une caractéristique de stationnement à modifier parmi plusieurs caractéristiques de stationnement allouée par le contrôleur, laquelle sélection dépend du taux d'occupation calculé.
- Selon un mode de réalisation, le procédé consiste à ne modifier la ou les caractéristiques de stationnement que si le taux d'occupation calculé est supérieur ou égal à une valeur seuil.
- Selon un mode de réalisation, le procédé comprend une étape de nouvelle modification d'au moins une caractéristique de stationnement allouée à une place de stationnement lorsque ladite place est utilisée par un véhicule identifié et/ou un conducteur identifié.
- Selon un mode de réalisation, le procédé consiste à moduler la durée du temps de stationnement autorisé alloué par le contrôleur aux places et/ou à moduler la tarification appliquée par le contrôleur lors de l'utilisation des places et/ou à placer les places dans un statut « réservé ».
- Selon un mode de réalisation, le procédé comprend une étape d'estimation d'une heure d'arrivée d'au moins un des véhicules identifiés et/ou d'au moins un des conducteurs identifiés, dans la zone géographique, la ou les caractéristiques de stationnement étant modifiées avant ladite heure d'arrivée estimée.
- Selon un mode de réalisation, le procédé comprend les étapes suivantes : - modification d'une ou plusieurs caractéristiques de stationnement avant l'heure d'arrivée estimée ;- modification d'une autre ou plusieurs autres caractéristiques de stationnement à partir de l'heure d'arrivée estimée.
- Selon un mode de réalisation, le procédé comprend les étapes suivantes : - modification d'une ou plusieurs caractéristiques de stationnement si, avant l'heure d'arrivée estimée, une place est occupée par un véhicule non identifiés et/ou un conducteur non identifiés ; - modification différente de ladite ou lesdites caractéristiques si, à partir de l'heure d'arrivée estimée, ladite place est occupée par un véhicule identifiés et/ou un conducteur identifiés.

Encore un autre aspect de l'invention concerne un système comprenant un serveur informatique (SERV) configurés pour mettre en oeuvre le procédé selon l'une des caractéristiques précédentes.

Encore un autre aspect de l'invention concerne un produit programme d'ordinateur comprenant des instructions de code pour l'exécution d'un procédé selon l'une des caractéristiques précédentes, lorsqu'il est exécuté par une unité de traitement d'un serveur informatique.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] illustre un exemple de réalisation d'un système pour la mise en oeuvre de l'invention,
[Fig. 2] illustre un exemple de résultat d'une analyse statistique des données historiques de navigation,
[Fig. 3] est un logigramme illustrant des étapes d'un processus informatique permettant au serveur de définir des zones géographiques,
[Fig. 4] est un logigramme illustrant des étapes d'un processus informatique permettant au serveur d'estimer une heure d'arrivée,
[Fig. 5] est un logigramme illustrant des étapes du procédé selon l'invention,
selon un mode de réalisation,
[Fig. 6] est un logigramme illustrant des étapes du procédé selon l'invention,
selon un autre mode de réalisation.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en oeuvre une ou plusieurs applications informatiques exécutées par des équipements ou serveurs informatiques. Par souci de clarté, il faut comprendre au sens de l'invention que « *un équipement ou serveur fait quelque* chose » signifie « *l'application informatique exécutée par une unité de traitement de l'équipement ou du serveur fait quelque* chose ». Tout comme *« l'application informatique fait quelque* chose » signifie « *l'application informatique exécutée par l'unité de traitement de l'équipement ou du serveur fait quelque chose ».*

Encore par souci de clarté, la présente invention est susceptible de faire référence à un ou plusieurs « *processus informatiques logiques* ». Ces derniers correspondent aux actions ou résultats obtenus par l'exécution d'instructions de différentes applications informatiques. Aussi, il faut également comprendre au sens de l'invention que « *un processus informatique logique est adapté pour faire quelque chose* » signifie « *les instructions d'une application informatique exécutées par une unité de traitement font quelque chose* ».

Encore par souci de clarté, les précisions suivantes sont apportées à certains termes utilisés dans la description et les revendications :
- « *Ressource informatique* » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- *« Serveur informatique »* peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, noeud, ferme de serveurs, ferme de noeuds, etc.
- « *Service* » peut être compris de façon non limitative comme l'ensemble des fonctionnalités proposé et assuré par un serveur et/ou par au moins un équipement connecté audit serveur par l'intermédiaire d'un réseau. Le service peut comprendre par exemple, les fonctionnalités suivantes : la mise à disposition automatique de places de stationnement, la réservation d'un véhicule, la localisation d'un véhicule, le verrouillage/déverrouillage à distance d'un véhicule partagé, etc.
- *« Requête* » désigne un ordre d'exécution pouvant suivre un protocole de communication et comprenant des paramètres en entrée (question, informations, ...) et éventuellement des paramètres en retour (réponse, information, ...), pouvant se présenter dans un format lié au protocole employé.
- *« Unité de traitement* » peut être compris de façon non limitative comme : processeur, microprocesseurs, CPU (pour Central Processing Unit).
- *« Matériel informatique* » représente une ou plusieurs pièces détachées d'un équipement informatique et peut être compris de façon non limitative comme hardware.
- *« Application informatique* » peut être comprise comme : logiciel, programme informatique, software, etc.
- « *Réseau informatique »* peut être compris de façon non limitative comme : bus informatique, réseau personnel (PAN), réseau local (LAN, WLAN, ..), réseau étendu (WAN), réseau internet, réseau intranet, réseau extranet. Le réseau informatique est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données »* peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- *« Véhicule partagé* » ou véhicules en libre-service (en anglais « *car sharing »)* est un véhicule mis à la disposition de « clients » ou membres. Le véhicule peut être : une voiture autonome, une voiture (moteur thermique et/ou électrique), un deux-roues motorisé (moteur thermique et/ou électrique), un vélo (classique ou avec assistance électrique), une trottinette (classique ou avec assistance électrique), une planche a roulette, un monocycle électrique, un gyropode, un bateau, etc.
- *« Flotte* » ou « *parc »* peut être compris comme une pluralité de véhicules appartenant ou gérés ou affiliés à une société, une agence publique, une coopérative, une association, un groupe d'individus, etc.
- Tel qu'utilisé ici, sauf indication contraire, l'utilisation des adjectifs ordinaux «*premier*», *«deuxième»,* etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

### Architecture.

Un service de véhicules partagé est un système dans lequel une société, une agence publique, une coopérative, une association, ou un groupe d'individus, met à la disposition de clients ou membres du service une flotte e véhicule Plutôt que de disposer d'un véhicule personnel, l'utilisateur du service dispose d'un véhicule qu'il ne paye que pour la durée de son besoin. En d'autres termes, lorsqu'un utilisateur utilise un véhicule partagé, il est facturé d'un certain montant. Le montant facturé dépendant généralement du nombre de kilomètres parcourus et/ou du temps d'utilisation du véhicule et/ou du modèle ou type de véhicule. Le reste du temps, le véhicule est destiné à être utilisé par d'autres membres. Un des avantages des véhicules partagés réside dans le fait qu'un utilisateur peut libérer son véhicule où il le souhaite. La position de ces véhicules n'est donc pas figée dans le temps, mais mouvante (en anglais freefloating), de sorte qu'il est généralement difficile de prédire à l'avance leur emplacement.

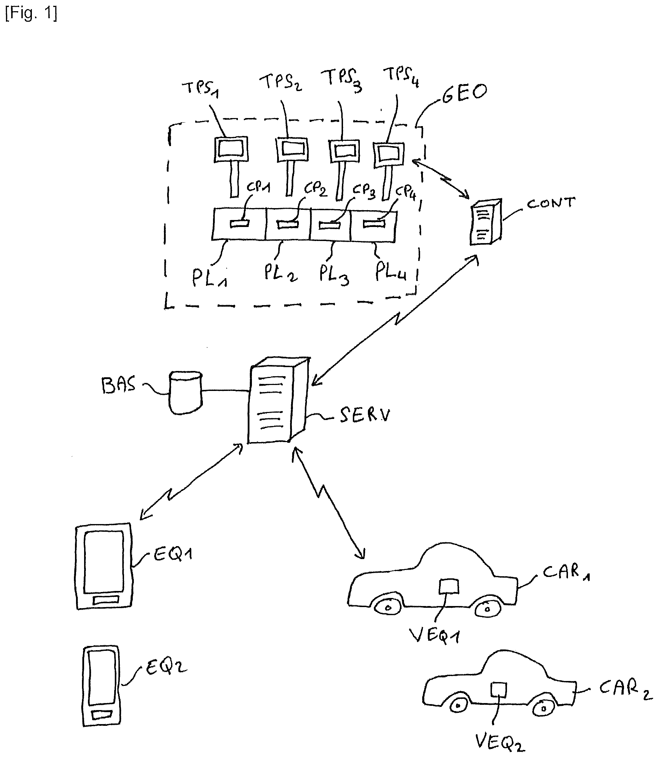

Sur la figure 1, le système pour la mise du procédé objet de l'invention comprend un serveur informatique SERV connecté à une base de données BAS, des véhicules de transport CARi, CAR₂, des équipements informatiques EQ₁, EQ₂, des places de stationnement PL₁-PL₄ localisées dans une zone géographique GEO déterminée, des indicateurs de temps de stationnement autorisé TPS₁-TPS₄ associés à chacune des places PL₁-PL₄. Les indicateurs TPS₁-TPS₄ sont pilotés par un contrôleur CONT.

Les équipements informatiques EQᵢ appartiennent à des conducteurs. Ils comportent chacun une interface de communication, par exemple GSM, 3G, 4G ou Wifi, pour établir une liaison de communication sans fil avec le serveur SERV au travers d'un réseau informatique, par exemple un réseau internet, s'appuyant sur une infrastructure permettant d'acheminer des communications sans fil provenant de l'équipement EQᵢ. Ce dernier est préférentiellement un téléphone intelligent (Smartphone), une tablette numérique, un ordinateur portable, etc. Il comprend les ressources informatiques, par exemple un code exécutable d'une application informatique téléchargeable, permettant de réaliser des fonctions du procédé de l'invention.

Selon un mode de réalisation, chaque conducteur est identifié auprès d'un serveur de gestion de droits qui peut être ou non le serveur distant SERV. Pour simplifier la suite de la description, on considère que le serveur de gestion de droits est le serveur SERV. Un conducteur identifié auprès du serveur SERV peut alors accéder à un service correspondant à la réservation automatique de place de stationnement. L'identification d'un conducteur passe par son enregistrement auprès du serveur. Cet enregistrement peut être réalisé auprès d'un service web d'un serveur distant associé au service. L'enregistrement comporte par exemple l'enregistrement d'un identifiant conducteur et d'une adresse réseau de l'équipement conducteur EQᵢ. Il peut s'agir d'un port, d'une adresse IP, d'une adresse MAC ou toute autre adresse ou combinaisons d'éléments constituants des adresses permettant d'identifier un équipement conducteur EQᵢ. Selon un mode de réalisation, un conducteur est préinscrit à partir d'un logiciel et est connus du fait que son identifiant est enregistré dans la base de données BAS. Selon un mode de réalisation, la base de données BAS associe un véhicule CAR à un conducteur lorsque ce dernier utilise ledit véhicule. Selon un mode de réalisation, le serveur SERV comporte une fonction permettant de réaliser les associations.

Les véhicules CAR₁-CAR₂ peuvent être des voitures autonomes, des voitures électriques, des voitures en covoiturage, des deux-roues motorisés, des vélos, des trottinettes, des planches à roulettes, des monocycles électriques, des gyropodes, etc. Les véhicules CAR₁-CAR₂ appartiennent préférentiellement à une flotte de véhicules partagés. Chaque véhicule CARi est associé à un numéro d'identification unique. Chaque véhicule CARi dispose avantageusement d'au moins un équipement VEQi comportant une interface de communication, par exemple GSM, 3G, 4G ou Wifi, pour établir une liaison de communication sans fil avec le serveur SERV au travers d'un réseau informatique. Les équipements VEQᵢ sont préférentiellement des ordinateurs embarqués comprenant les ressources informatiques permettant de réaliser des fonctions du procédé de l'invention. Le serveur SERV attribut des statuts à chaque véhicule CARi :
- statut dit « Disponible à la réservation » : le véhicule est stationné (garé) et non réservé,
- statut dit « Indisponible à la réservation » : soit le véhicule est stationné mais déjà réservé par un utilisateur (statut « Indisponible-Réservé »), soit le véhicule est en cours de fonctionnement (statut « Indisponible-en fonctionnement »). D'autres types de statuts similaires peuvent être prévus.

Le serveur SERV met régulièrement à jour, préférentiellement en temps réel, la base de données des véhicules CAR₁-CAR₂. Cette base de données BAS regroupe notamment : l'identifiant de chaque véhicule, leur statut (« Disponible à la réservation » ou « Indisponible à la réservation »), et leur position géographique. D'autres informations et/ou données peuvent être regroupées dans la base de données BAS, le cas échéant.

L'information sur le statut d'un véhicule CARᵢ est transmise au serveur SERV en temps réel ou a des intervalles de temps prédéfinis (par exemple toutes les 5 minutes). Cette information peut être transmise au serveur SERV :
- par l'équipement embarqué VEQi du véhicule CARi suite à une détection d'un évènement. Cet événement est par exemple généré automatiquement dès le démarrage du véhicule CARi ou par une action du conducteur sur une commande spécifique aménagé sur ledit véhicule. Cette commande peut être actionnée lorsque le conducteur a libéré le véhicule après un trajet. Le statut passe alors de « Indisponible à la réservation » à « Disponible à la réservation »,
- par l'équipement EQᵢ du conducteur du véhicule CARi, consécutivement à une action dudit conducteur sur son équipement. Le conducteur peut par exemple actionner une touche dédiée affichée sur un écran tactile de son équipement, après avoir stationné et libéré son véhicule. Le statut passe alors de « Indisponible à la réservation » à « Disponible à la réservation ».
   Lorsque le serveur SERV reçoit une requête de réservation de la part d'un conducteur abonné à un service de partage de véhicules, et qu'il peut faire droit à cette requête (c'est-à-dire qu'un véhicule est disponible à la réservation), ledit serveur fait passer le statut d'un véhicule de « Disponible à la réservation » à « Indisponible à la réservation ». Cette requête de réservation peut par exemple être générée via un équipement électronique ou via une application informatique auquel le conducteur est abonné.

La position géographique de chaque véhicule CARᵢ peut être obtenue par satellite (système GPS ou Galileo) ou par un système de triangulation (par exemple, un système utilisant les cellules d'un réseau 4G) ou par une combinaison des deux systèmes de localisation. L'équipement VEQi d'un véhicule CARi comporte avantageusement un composant, par exemple un composant GPS, permettant d'obtenir une information de géo-localisation qui peut être récupérée par le serveur SERV. Le serveur SERV peut récupérer automatiquement cette information en interrogeant en temps réel ou a intervalles de temps régulier (par exemple toutes les 5 minutes), les équipements VEQi des véhicules CARi. Les équipements VEQi peuvent également transmettre automatiquement cette information au serveur SERV (sans répondre à une requête d'interrogation), en temps réel ou a intervalles de temps régulier (par exemple toutes les 5 minutes).

Selon une alternative, la position géographique d'un véhicule CARi peut correspondre à une position définie à partir d'une interface de saisie d'un équipement EQi d'un conducteur utilisant ledit véhicule. Par exemple, le conducteur peut évaluer une position à partir d'une carte interactive affichée sur une interface graphique de son équipement EQi. Cette position est ensuite transmise au serveur SERV.

Selon une autre alternative, la position géographique d'un véhicule CARi peut correspondre à la position de l'équipement EQᵢ du conducteur utilisant ledit véhicule. Ce dernier peut donc être dépourvu d'équipement VEQi. L'équipement EQi comporte avantageusement un composant, par exemple un composant GPS, permettant d'obtenir une information de géo-localisation qui est transmise au serveur SERV. Le serveur SERV peut récupérer automatiquement cette information en interrogeant en temps réel ou a intervalles de temps régulier, les équipements EQi des conducteurs. Les équipements EQi peuvent également transmettre automatiquement cette information au serveur SERV (sans répondre à une requête d'interrogation), en temps réel ou a intervalles de temps régulier. Cette information de géo-localisation provenant d'un équipement EQi, permet également au serveur SERV de connaître la position géographique d'un conducteur abonné au service, mais n'utilisant pas un véhicule CARᵢ.

Les places de stationnement PLᵢ sont des places situées dans des rues, sur des trottoirs, dans des parkings publics ou privés, ou dans n'importe quel lieu physique. Ces places PLᵢ sont localisées dans la zone géographique GEO. Cette zone géographique peut correspondre à une rue, en regroupement de rue, un quartier, un lieu précis tel qu'un parking, etc. La position géographique de chaque place PLᵢ est avantageusement connue du serveur SERV et enregistrée dans la base de données BAS. Chaque place PLᵢ est avantageusement associée à un numéro d'identification unique enregistré dans la base de données BAS.

Chaque place PL₁-PL₄ est également avantageusement équipée d'un capteur CP₁-CP₄ pour déterminer si ladite place est occupée par un véhicule. Chaque capteur CPᵢ peut être connecté à un indicateur de temps de stationnement autorisé TPSᵢ, au contrôleur CONT, ou au serveur SERV. Les capteurs CP₁-CP₄ peuvent être mis en réseau via une connexion filaire ou sans fil. La détermination de l'occupation ou de la disponibilité d'une place PLᵢ est transmise en temps réel au contrôleur CONT et/ou au serveur SERV.

Les capteurs CP₁-CP₄ peuvent être des capteurs optiques (ex : caméras, détecteurs photoélectriques), des capteurs de présence inductifs (ex : à boucle inductive), des capteurs de présence capacitifs, des capteurs de présence magnétiques (ex : magnétomètres), des capteurs de présence à ultrason, etc. On prévoit avantageusement un capteur par place de stationnement, mais un capteur (par exemple une caméra) pourrait être positionné pour surveiller simultanément plusieurs places.

en fonction de l'état des capteurs CP₁-CP₄, le serveur SERV peut attribuer des statuts à chaque place PL₁-PL₄, et notamment les statuts suivants :
- statut dit « non occupée » : le capteur ne détecte aucun véhicule stationné sur la place,
- statut dit « occupée » : le capteur détecte un véhicule stationné sur la place.

Chaque place PL₁-PL₄ peut être équipée d'un indicateur TPS₁-TPS₄ de temps de stationnement autorisé et/ou de la tarification appliquée lors de l'utilisation desdites places. Chaque indicateur TPSi est connecté de manière filaire ou sans fil au contrôleur CONT. Ils peuvent également être mis en réseau, un seul indicateur étant connecté au contrôleur CONT et jouant le rôle de maître, les autres indicateurs étant des esclaves. Les indicateurs TPS₁-TPS₄ indiquent pendant quelle durée et/ou à quel tarif les véhicules peuvent utiliser les places PL₁-PL₄.

Chaque indicateur TPSi peut comporter une interface physique (par exemple un écran LCD et/ou une enceinte) indiquant de manière visuelle et/ou sonore le statut d'une place PLᵢ et/ou le temps de stationnement autorisé et/ou le tarif appliqué. Par exemple, une place PLᵢ peut avoir les statuts suivants :
- statut dit « disponible » : aucun véhicule n'est stationné sur la place, n'importe quel véhicule (identifié ou non identifié par le serveur SERV) pouvant se garer sur ladite place,
- statut dit « indisponible » : un véhicule est stationné sur la place, aucun autre véhicule (identifié ou non identifié par le serveur SERV) pouvant se garer sur ladite place ; ou la place est temporairement condamnée.
- statut dit « réservé » : aucun véhicule n'est stationné sur la place, mais seul un véhicule identifié ou un type de véhicule identifié (ex : un véhicule partagé), ou un conducteur identifié (ex : un conducteur abonné à un service de véhicule partagé), est autorisé à se garer sur ladite place.

Chaque statut peut être clairement affiché sur l'interface des indicateurs TPS₁-TPS₄ et/ou être associé à un code couleur. Par exemple bleu pour un statut « disponible », rouge pour un statut « indisponible » et jaune pour un statut « réservé ». Ces codes couleur peuvent être mis en oeuvre à l'aide de sources lumineuses intégrées dans les indicateurs TPS₁-TPS₄.

Le serveur SERV met régulièrement à jour, préférentiellement en temps réel, la base de données des places PLᵢ. La base de données BAS regroupe notamment : l'identifiant de chaque place, leur position géographique, l'historique de leur statut (« non occupée » ou « occupée », « disponibles », « indisponible » « réservée », à quelle date, quelle heure, pendant combien de temps, ...). D'autres informations et/ou données relatives aux places PLᵢ peuvent être regroupées dans la base de données BAS, le cas échéant.

Le temps de stationnement autorisé est également clairement indiqué sur l'interface des indicateurs TPS₁-TPS₄. Par exemple 2 heures, 1 heures, 10 minutes, 5 minutes, etc. L'affichage du temps peut se présenter sous la forme d'un compte à rebours démarrant dès qu'un véhicule est détecté sur une place Plᵢ et indiquant le temps alloué restant.

La tarification appliquée peut également être indiquée sur l'interface des indicateurs TPS₁-TPS₄. Par exemple 0,2 €/minute, 10€/heure, etc.

Dans un autre mode de réalisation, l'interface indiquant le temps de stationnement autorisé et/ou le statut d'une place et/ou la tarification appliquée, peut être virtuelle et s'afficher sur un écran de l'équipement EQi d'un conducteur ou sur un écran de l'équipement VEQi d'un véhicule CARi stationné sur une place.

Dans un autre mode de réalisation, un seul indicateur TPSi peut être prévu pour plusieurs places PL₁-PL₄ avec des indications indiquant le statut de chacune desdites places et/ou le temps de stationnement autorisé et/ou la tarification appliquée.

Le contrôleur CONT se présente sous la forme d'un ordinateur ou d'une unité de traitement comportant toutes les ressources et matériels informatiques permettant de réalisées les fonctionnalités décrites dans la présente description. Le contrôleur CONT peut être intégré dans un des indicateur TPSi ou être disposé dans un caisson dédié situé à proximité desdits indicateurs. Le contrôleur CONT est configuré pour allouer des caractéristiques de stationnement aux places PL₁-PL4, ces caractéristiques pouvant être modifiées en réponse à la réception d'instructions provenant du serveur SERV. Sur la figure 1, le contrôleur permet notamment de piloter les indicateurs TPS₁-TPS₄. Il reçoit des instructions provenant du serveur SERV et transmet des instructions aux indicateurs TPS₁-TPS₄, notamment des instructions leur permettant d'indiquer le statut d'une place PLᵢ et/ou le temps de stationnement autorisé et/ou la tarification à appliquer (i.e. les caractéristiques de stationnement).

Le contrôleur CONT comporte une interface de communication, par exemple GSM, 3G, 4G ou Wifi, pour établir une liaison de communication sans fil avec le serveur SERV au travers d'un réseau informatique, par exemple un réseau internet. Le contrôleur peut ainsi faire remonter vers le serveur SERV, en temps réel ou à intervalles de temps réguliers, diverses informations telles que : l'état des capteurs CP₁-CP₄ et donc le statut de chacune des places PL₁-PL₄ (« occupée » ou « non occupée ») ; le temps alloué à chacune desdites places ; le temps alloué restant pour chaque place occupée ; un dépassement du temps alloué ; la tarification appliquée, etc.

### Procédé.

Selon une caractéristique de l'invention, on construit un modèle prédictif basé sur une analyse statistique de données d'observation, dans le but de prédire l'utilisation des places PL₁-PL₄, à une heure donnée, par des conducteurs/véhicules identifiés. L'objectif est que des places PL₁-PL₄ soient disponibles lorsque les véhicules CAR₁-CAR₂ arrivent dans la zone géographique GEO. Des places peuvent ainsi être rendues libres pour des conducteurs et/ou des véhicules « prioritaires » afin de réduire les embouteillages et la pollution. Ces conducteurs/véhicules prioritaires sont par exemple des conducteurs ayant adhérés à un service de véhicules partagés, des véhicules électriques, des véhicules en covoiturage, etc. Il peut également s'agir de livreurs et/ou de camions dont on souhaite qu'ils puissent être déchargés à une heure déterminée en étant garé sur des places de stationnement, plutôt qu'au milieu d'une voie de circulation. Les conducteurs/véhicules prioritaires qu'il est souhaitable de privilégié, sont ici ceux identifiés par le serveur SERV.

Les données d'observation sont des données historiques de navigation de véhicules identifiés et/ou de conducteurs identifiés.

La base de données BAS regroupant notamment l'identifiant de chaque véhicule identifié CARi et/ou de chaque conducteur identifié et leur position géographique respective, le serveur SERV peut aisément déterminer, à partir de ces données récoltées, leurs parcours respectifs au cours d'une journée, d'une semaine, d'un mois, d'une année, etc. L'analyse statistique de ces données va permettre au serveur SERV d'anticiper le parcours des véhicules identifiés CAR₁-CAR₂ et/ou des conducteurs identifiés et d'estimer un nombre de véhicules susceptibles de se garer sur les places de stationnement PL₁-PL₄, à partir d'une heure d'arrivée dans une zone géographique déterminée.

L'analyse statistique repose sur un raisonnement automatisé du serveur SERV qui conduit à des déterminations probabilistes et/ou des déterminations fondées sur des statistiques. Le serveur SERV peut ainsi définir des actions à partir d'un ensemble d'événements observées et/ou à partir de données d'événements observées. L'analyse statistique des données peut être basée sur diverses techniques connues de modélisation de données, et préférentiellement un réseau bayésien. Un réseau bayésien est un modèle probabiliste représentant des variables aléatoires et leurs dépendances conditionnelles via un DAG (Directed Acyclic Graph) et des tables de probabilités. Il sert principalement à représenter une connaissance, donner une règle de décision, prévoir, et déterminer des hypothèses de causalité. L'homme du métier peut notamment se référer aux publications suivantes concernant les réseaux bayésiens : BRIDE, « Méthodes de construction de réseaux bayésiens », Université de Strasbourg, Aout 2016, pages 1-34 ; HECKERMAN, « A bayesian approach to learning causal network », MSR-TR-95-04, MicrosoftResearch, 1995 ; PEARL, « Probabilistic Reasoning in Intelligent Systems : Networks of Plausible Inference », Morgan Kaufmann Publishers, 1988).

D'autres types d'analyse statistique peuvent être mise en oeuvre par le serveur SERV telles que : modèle de Markov, réseaux de neurones, modèles probabilistes, raisonnement fondés sur la logique et logique floue, échantillonnage de Gibbs, etc.

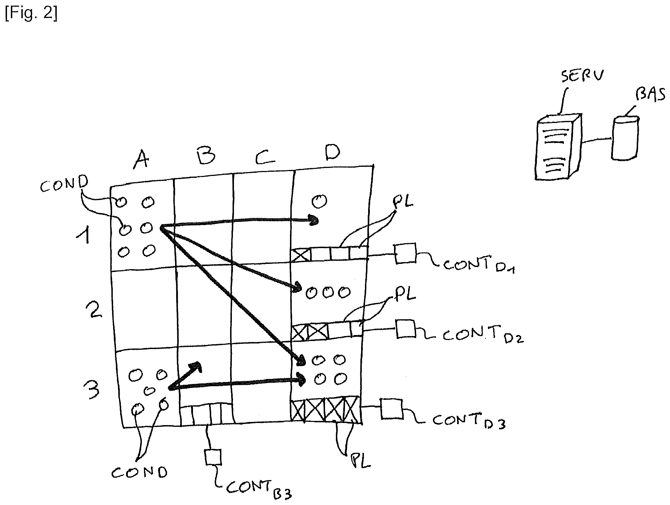

La figure 2 illustre un exemple de résultat de cette analyse statistique. Les différentes zones géographiques A₁₋₃, B₁₋₃, C₁₋₃, D₁₋₃ représentent, par exemple, des quartiers ou un agencement de rues d'une ville. Ce découpage en zones géographiques peut être réalisé automatiquement par le serveur SERV. Ce dernier est par exemple adapté pour se connecter à une ou plusieurs bases de données d'un ou plusieurs sites internet dédiés, notamment des sites de cartographie numérique (ex : https://fr.mappy.com, https://www.viamichelin.fr) pour récupérer un plan et le subdivisé en zones géographiques. Les zones A₁ et A₃ sont dites « zones de départ » et les zones B₃, D₁, D₂ et D₃ sont dites « zones d'arrivée ».

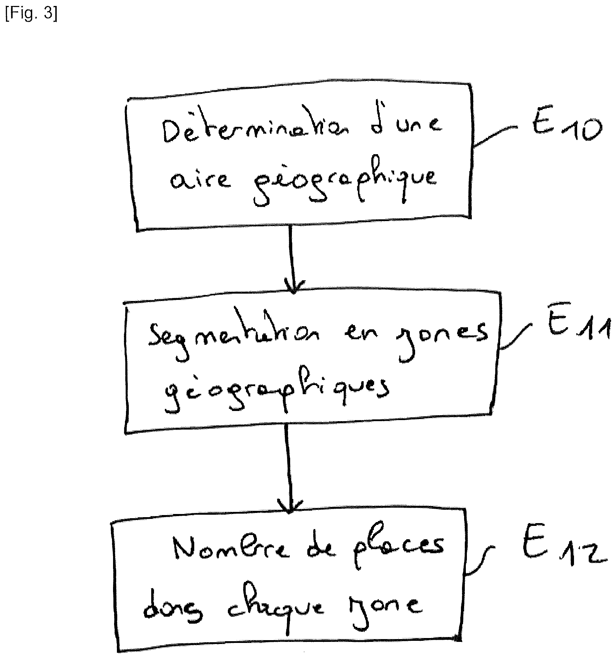

La figure 3 est un logigramme illustrant des étapes d'un processus informatique permettant au serveur SERV de définir des zones géographiques. A l'étape E10, le serveur SERV sélectionne une aire géographique (ex : une ville) en récupérant une cartographie numérique auprès d'un site internet dédié par exemple. A l'étape E11, le serveur SERV segmente cette aire géographique en plusieurs zones géographiques (ex : un agencement de rues). A l'étape E12, le serveur SERV interroge la base de données BAS pour connaître le nombre de place de stationnement dans chaque zone géographique. Selon un mode de réalisation, pour chaque zone géographique, le serveur SERV interroge la base BAS pour connaitre les places dont les coordonnées géographiques sont incluses dans celles de ladite zone concernée.

Par souci de clarté et de concision, la suite de la description fait seulement référence à l'observation du comportement de conducteurs identifiés par le serveur SERV. L'invention s'applique de manière identique à l'observation du comportement de véhicules identifiés par le serveur SERV.

A un instant T0 (par exemple un lundi à 18h, à la sortie des bureaux) le serveur SERV sait qu'il y a 6 conducteurs identifiés COND dans la zone de départ A₁ (ex : première zone de bureaux) et 5 conducteurs identifiés COND dans la zone de départ A₃ (ex : seconde zone de bureaux). Ces informations proviennent notamment des positions géographiques des équipements EQ des conducteurs récupérées en temps réel par le serveur SERV. Ces informations peuvent également être prédites suite à une analyse statistique des positions géographiques historiques desdits équipements à l'instant T0.

Grâce à l'analyse statistique des données historiques de navigation précitées, le serveur SERV prédit que pour les conducteurs COND situés dans la zone de départ A₁ : 17 % vont se diriger vers la zone d'arrivée D₁ (ex : zone commerciale), 50 % vont se diriger vers la zone d'arrivée D₂ (ex : zone d'habitation) et les 33% restant vont se diriger dans la zone d'arrivée D₃ (ex : centre-ville). Dans l'exemple de la figure 2, le serveur SERV prédit donc que : 1 conducteur va se diriger vers la zone d'arrivée D₁, 3 conducteurs vont se diriger vers la zone d'arrivée D₂ et 2 conducteurs vont se diriger vers la zone d'arrivée D3.

Le serveur SERV peut également prédire que pour les conducteurs COND situés dans la zone de départ A₃ : 60 % vont se diriger vers la zone d'arrivée B₃ (ex : zone d'habitation), et 40% vont se diriger dans la zone d'arrivée D₃. Dans l'exemple de la figure 2, le serveur SERV estime donc que : 3 conducteurs vont se diriger vers la zone d'arrivée B₃ et 2 conducteurs vont se diriger vers la zone d'arrivée D₃.

De manière alternative ou complémentaire, au lieu d'anticiper le départ des conducteurs depuis les zones de départ A₁ et A₃ à l'instant T0, le SERV prédit leur arrivée dans les zones d'arrivée B₃, D₁, D₂ et D₃. Ainsi, le serveur SERV peut prédire, qu'à un instant T1 (par exemple un lundi à 19h) : 3 conducteurs vont arriver dans la zone d'arrivée B₃, 1 conducteur va arriver dans la zone d'arrivée D₁, 3 conducteurs vont arriver dans la zone d'arrivée D₂ et 4 conducteurs vont arriver dans la zone d'arrivée D₃. Le nombre estimé de véhicules susceptibles d'atteindre chaque zone d'arrivée B₃, D₁, D₂ et D₃ peut correspondre aux prédictions d'utilisation des places PL dans chacune desdites zones à l'instant T1.

L'heure d'arrivée T1 peut être estimée à partir d'une analyse statistique des positions géographiques historiques des conducteurs par le serveur SERV et/ou des données historiques des statuts des places PL. L'heure d'arrivée T1 peut également être calculée à partir de l'heure de départ T0 et de la distance à parcourir entre les zones de départ et d'arrivée.

La valeur de T1 calculée peut être pondérée par des données contextuelles telles que le jour de la semaine, le mois de la semaine, l'état réel du trafic ou des prédictions de trafic entre les zones de départ et d'arrivée et diverses autres variables aléatoires.

Le serveur SERV peut notamment récupérer, auprès de sites internet dédiés, des données relatives au trafic routier entre une zone de départ et une zone d'arrivée. Ces données de trafic sont par exemple : trafic dense dans telle zone, ou trafic fluide dans telle autre zone, circulation fermée dans telle rue, travaux dans telle autre rue, etc. Le serveur SERV va alors prendre en compte ces données pour le calcul de la valeur de T1.

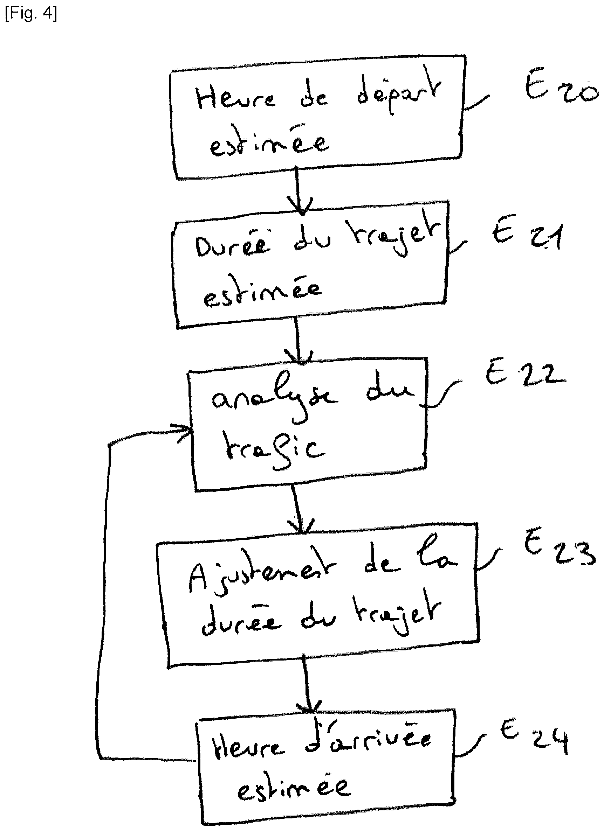

La figure 4 est un logigramme illustrant des étapes d'un processus informatique permettant au serveur SERV d'estimer une heure d'arrivée T1. A l'étape E20, le serveur SERV détermine une heure de départ T0 d'une zone de départ (ex : A₁). A l'étape E21, le serveur SERV calcul la durée du trajet entre la zone de départ et une zone d'arrivée (ex : D₃). A l'étape E22, le serveur SERV analyse l'état du trafic routier entre A₁ et D₃. En fonction du résultat de cette analyse, le serveur SERV ajuste la durée du trajet (étape E23) pour estimer l'heure d'arrivée T1 (étape E24). Les étapes E22 à E24 peuvent être réitérées en temps réel pour estimer au mieux, et de manière dynamique, l'heure d'arrivée T1.

En tout état de cause, l'heure d'arrivée T1 estimée par le serveur SERV peut différer d'une zone d'arrivée à l'autre, par exemple : 18h30 dans la zone B₃, 18h45 dans la zone D₁, 19h dans la zone D₂, 19h30 dans la zone D₃. En outre, l'heure d'arrivée T1 peut être une heure précise ou un seuil, par exemple de 18h30 à 19h dans la zone B₃, de 18h45 à 20h30 dans la zone D₁, de 19h à 19h30 dans la zone D₂, et de 19h30 à 21h dans la zone D₃. Un seuil d'heure d'arrivée est notamment déterminé par une analyse statistique des données historiques enregistrées dans la base de données BAS.

Le serveur SERV détermine qu'il y a 4 places de stationnement PL dans la zone d'arrivée _{D1}, 4 places de stationnement PL dans la zone d'arrivée _{D2} et 4 places de stationnement PL dans la zone d'arrivée _{D3}. Ces informations proviennent notamment des différentes positions géographiques des places enregistrées dans la base de données BAS. De la même façon, le serveur SERV connaît, à un instant donné (T0 et/ou T1) : le statut de chacune de ces places (« non occupée », « occupée », « disponibles », « indisponible », « réservée ») ; le temps initialement alloué à chacune desdites places ; le temps alloué restant pour chaque place occupée ; un éventuel dépassement du temps alloué ; etc.

Selon un objectif de l'invention, les conducteurs COND doivent pouvoir facilement se garer sur des places de stationnement PL lorsqu'ils atteignent les zones d'arrivée B₃, D₁, D₂ et D₃, sans qu'ils n'aient à faire une réservation préalable de place comme dans les solutions connues de l'art antérieur. Les conducteurs doivent aisément pouvoir trouver des places disponibles dans les zones d'arrivée concernées, au moment où ils atteignent ladite zone ou avec un temps d'attente minimum.

Une façon d'atteindre cet objectif consiste à modifier les caractéristiques de stationnement allouées par les contrôleurs CONT_{B1}, CONT_{D1}, CONT_{D2}, CONT_{D3} en fonction des prédictions d'utilisation des places PL dans chaque zone géographique B₁, D₁, D₂, D₃. Les caractéristiques de stationnement modifiées sont préférentiellement : le temps de stationnement alloué par les contrôleurs CONT_{B1}, CONT_{D1}, CONT_{D2}, CONT_{D3} et/ou la tarification appliquée par lesdits contrôleurs auxdites et/ou le statut desdites places.

En reprenant l'exemple de la figure 2, par analyse statistique, le serveur SERV prédit que 3 conducteurs vont arriver dans la zone d'arrivée B₃ à partir d'une heure d'arrivée estimée T1_{B3} (ex : entre 18h30 et 19h), que 1 conducteur/véhicule va arriver dans la zone d'arrivée D₁ à une heure d'arrivée estimée T1_{D1} (ex : entre 18h45 à 20h30), que 3 conducteurs/véhicules vont arriver dans la zone d'arrivée D₂ à une heure d'arrivée estimée T1_{D2} (ex : entre 19h à 19h30) et que 4 conducteurs/véhicules vont arriver dans la zone d'arrivée D₃ à une heure d'arrivée estimée T1_{D3} (ex : entre 19h30 à 21h).

Le processus informatique logique conduisant à la modification des caractéristiques de stationnement est initié par le serveur SERV avant l'heure d'arrivée estimée, par exemple 30 minutes ou 60 minutes avant cette heure. Le processus peut être lancé à la même heure T0 pour toutes les zones d'arrivée (par exemple 18h) ou à une heure spécifique pour chaque zone d'arrivée.

Pour la zone d'arrivée D₁, le serveur SERV lance le processus à 18h15 par exemple (T0_{D1}). Il interroge la base de données BAS et analyse que sur les 4 places PL de la zone D₁, une seule place est actuellement occupée ou indisponible (marquée par une croix sur la figure 2), les trois autres places étant libres, c'est-à-dire non occupées et disponibles. L'analyse statistique permet de prédire qu'un seul véhicule est susceptible de se garer sur les places de la zone d'arrivée D₁ entre 18h45 à 20h30. Le nombre de places libres (= 3) est ici supérieur au nombre de véhicules estimés (= 1).

Selon un mode de réalisation, le serveur SERV ne fait rien dans ce cas. Il peut notamment calculer que le risque est faible de voire les trois places libres de la zone d'arrivée D₁, occupées entre 18h15 (T0_{D1}) et 20h30 (fin de T1_{D1}). Ce calcul de risque est par exemple basé sur une analyse statistique des données historiques d'occupation des places PL dans la zone D₁ enregistrées dans la base BAS (données relatives aux statuts « non occupée » ou « occupée », à quelle date, quelle heure, pendant combien de temps, ...). Le serveur SERV peut par exemple calculer la moyenne du temps où les places PL ont un statut « occupée » entre T0_{D1} et fin de T1_{D1}. Le taux d'occupation est alors facilement déduit du ratio : {temps d'occupation moyen calculé} / {temps entre T0_{D1} et fin de T1_{D1}}. Le serveur SERV peut notamment déduire de ces données que les places PL, dans la zone D₁, ont un taux d'occupation inférieure à 10 % les lundis entre 18h15 et 20h30. Il y a donc une forte probabilité qu'au moins une place reste libre lorsque le conducteur arrivera dans la zone D₁ entre 18h45 et 20h30.

Pour la zone d'arrivée B₃, le serveur SERV lance le processus à 18h par exemple (T0_{B3}). En interrogeant la base de données BAS, il analyse que les 4 places PL de la zone B₃ sont toutes libres. Le serveur SERV a estimé que trois véhicules sont susceptibles de se garer sur les places de la zone d'arrivée B₃. Le nombre de places libres (=4) est ici supérieur au nombre de véhicule estimé (=3), mais dans une moindre mesure que pour la zone D₁.

Selon une première hypothèse, le serveur SERV ne fait rien. Il calcule que le risque est faible de voire trois des quatre places libres de la zone d'arrivée B₃, occupées entre 18h (T0_{B3}) et 19h (fin de T1_{B3}). Ce calcul de risque est similaire à celui décrit au paragraphe précédent. Le serveur SERV fait préférentiellement une analyse statistique des données historiques enregistrées dans la base BAS, pour déterminer que les places PL de la zone B₃, ont un taux d'occupation inférieure à 2 % les lundis entre 18h et 19h. Il y a donc une forte probabilité qu'au moins trois places restent libres lorsque les conducteurs/véhicules arriveront dans la zone B₃ entre 18h30 et 19h.

Selon une autre hypothèse, le serveur SERV analyse que les places PL de la zone B₃, ont un taux d'occupation élevée, par exemple égal ou supérieur à 50 %, tous les lundis entre 18h et 19h. Il y a donc un risque important que les conducteurs arrivant dans la zone B₃ entre 18h30 et 19h ne trouvent pas tous une place libre.

Le serveur SERV va dans ce cas moduler le temps de stationnement autorisé alloué par le contrôleur CONT_{B3}. Par exemple, si le temps maximal de stationnement normalement alloué est de 120 minutes, le serveur SERV va abaisser ce temps à 10 minutes à partir de 18h. Le serveur SERV peut également initier un compte-à-rebours à partir de 18h pour que les places soient disponibles à partir de 18h30 (début de T1_{B3}): un véhicule se garant sur une place libre à 18h aura un temps alloué de 30 minutes, un autre véhicule se garant sur une place libre à 18h20 aura une temps alloué de 10 minutes, un autre véhicule se garant sur une place libre à 18h25 aura une temps alloué de 5 minutes, etc.

De manière alternative ou complémentaire, le serveur SERV peut également moduler la tarification appliquée par le contrôleur CONT_{B3}. Par exemple, si le tarif normalement appliqué est de 0,2 €/minute, le serveur SERV va augmenter ce tarif à 2€/minute à partir de 18h, de manière à rendre ce tarif prohibitif pour inciter les conducteurs à libérer les places le plus rapidement possible. Cette augmentation tarifaire peut être fixe ou progressive, pour être de plus en plus forte au fur et à mesure qu'on se rapproche de l'heure d'arrivée estimée.

Les instructions pour moduler le temps de stationnement et/ou la tarification sont générées par le serveur SERV et transmises au contrôleur CONT_{B3}. Le contrôleur CONT_{B3} pilote alors les indicateurs associés aux places libres PL pour qu'ils affichent le nouveau temps de stationnement autorisé maintenant alloué et/ou le nouveau tarif appliqué.

Cet abaissement du temps de stationnement autorisé et/ou l'augmentation de la tarification permet d'accélérer le turn-over des places de stationnement. D'autres véhicules et/ou conducteurs non identifié par le serveur SERV sont autorisés à se garer sur les places PL de la zone B₃, mais ils sont incités à libérer lesdites places plus rapidement, de sorte que les trois conducteurs identifiés COND arrivant dans la zone B₃ entre 18h30 (début de T1_{B3}) et 19h (fin de T1_{B3}), auront une forte probabilité de trouver une place disponible, ou à tout le moins, avec un temps d'attente limité.

Selon un autre mode de réalisation, au lieu de moduler le temps de stationnement et/ou la tarification, le serveur SERV modifie le statut des trois places libres PL de la zone B₃ pour les placer dans un statut « réservé ». Les instructions pour changer le statut sont générées par le serveur SERV et transmises au contrôleur CONT_{B3}. qui pilote les indicateurs. Ces derniers vont afficher sur leur interface ce statut : seuls les conducteurs identifiés par le serveur SERV sont autorisés à se garer sur les places PL de la zone B₃.

Selon un autre mode de réalisation, le serveur SERV module le temps de stationnement et/ou la tarification, et modifie également le statut des trois places libres PL de la zone B₃. Par exemple, le serveur SERV abaisse le temps de stationnement et/ou augmente la tarification entre 18h (T0_{B3}) et 18h30 (début de T1_{B3}). Et à partir de 18h30 et jusqu'à 19h (fin de T1_{B3}), chaque place libre est automatiquement placée dans un statut « réservé » et/ou soumise à plus forte augmentation de la tarification.

Selon un autre mode de réalisation, le serveur SERV module le temps de stationnement et/ou la tarification et/ou modifie le statut des places libres de la zone B₃, automatiquement, sans calcul préalable du taux d'occupation des places PL.

Le serveur SERV peut transmettre automatiquement une notification aux équipements VEQ des véhicules CAR identifiés (et/ou aux équipements EQ des conducteurs identifiés), informant que des places leur sont réservées et/ou que des places seront disponibles dans la zone B₃ lorsqu'ils y pénétreront. Cette notification s'affiche préférentiellement sur une interface des équipements VEQ et/ou EQ et/ou est communiquée de manière vocale à l'intérieur des véhicules CAR. Cette notification peut être accompagnée d'une demande de confirmation du type « *Pourriez vous nous confirmer que êtes vous intéressés par cette mise à disposition de place dans la zone B₃* ». En cas de confirmation, le serveur SERV maintient le processus peut transmettre aux équipements VEQ et/ou EQ des instructions pour se rendre aux places mise à disposition. En cas d'infirmation, le serveur SERV ajuste le processus en diminuant le nombre estimé de véhicules.

Pour la zone d'arrivée D₂, le serveur SERV lance le processus à 18h30 par exemple (T_{0D2}). En interrogeant la base de données BAS, il analyse que deux des 4 places PL de la zone D₂ sont occupées ou indisponibles. Le serveur SERV a estimé que trois conducteurs/véhicules sont susceptibles de se garer sur les places de la zone d'arrivée D₂. Le nombre de places libres (=2) est ici inférieur au nombre de véhicule estimé (=3).

Le serveur SERV agit en modifiant les caractéristiques de stationnement allouées par le contrôleur CON_{TD2}. Par exemple, le serveur SERV va moduler le temps de stationnement et/ou la tarification à partir de 18h30 (abaissement du temps ou compte-à-rebours et/ou augmentation de la tarification) de sorte que les places qui sont libres à 18h30 puissent être utilisées par d'autres véhicules mais soient à nouveau libérées dès 19h (début de T_{1D2}). Il en est de même pour les places qui sont occupées ou indisponibles à 18h30 mais qui sont à nouveau libres entre 18h30 et 19h. A partir de 19h et jusqu'à 19h30 (fin de T_{1D2}), chaque place libre est automatiquement placée dans un statut « réservé ».

Pour la zone d'arrivée D₃, le serveur SERV lance le processus à 19h par exemple (T0_{D3}). En interrogeant la base de données BAS, il analyse que les 4 places PL de la zone D₃ sont occupées ou indisponibles. Le serveur SERV a estimé que quatre conducteurs/véhicules sont susceptibles de se garer sur les places de la zone d'arrivée D₃. Le nombre de places libres (=0) est ici bien inférieur au nombre de véhicule estimé (=4).

Le serveur SERV agit et module le temps de stationnement autorisé alloué et/ou la tarification appliquée par le contrôleur CONT_{D3} de sorte que les places qui sont occupées ou indisponibles à 19h et qui se libèrent entre 19h et 19h30 (début de T1_{D3}), puissent être occupées par d'autres véhicules, mais soient à nouveau libérées dès 19h30. A partir de 19h30 et jusqu'à 21h (fin de T1_{D3}), chaque place libre est automatiquement placée dans un statut « réservé ».

Différentes manières permettent au serveur SERV de savoir qu'un conducteur identifié utilise une des places dans une zone géographique d'arrivée. Par exemple, le serveur SERV peut constater que la position géographique de l'équipement EQ du conducteur (ou du véhicule) coïncide avec la position géographique de ladite place. Le capteur associé à ladite place peut également détecter la présence dudit conducteur/véhicule, notamment lorsque ledit capteur est une caméra. Ce type de capteur peut alors transmettre au serveur SERV une photo du conducteur ou de la plaque d'immatriculation du véhicule qu'il conduit. L'équipement EQ du conducteur ou l'équipement VEQ du véhicule qu'il conduit peut également transmettre (de manière automatique ou suite à l'activation d'une touche dédiée) son identifiant au contrôleur CONT qui le transfère au serveur SERV.

Lorsque le serveur SERV a reçu une information lui permettant de déterminer qu'un conducteur identifié utilise une des places dans une zone géographique d'arrivée, ledit serveur peut à nouveau modifier une ou plusieurs des caractéristiques de stationnement allouées à ladite place par le contrôleur concerné. Il peut notamment augmenter le temps de stationnement autorisé. Par exemple, si le temps alloué avant son arrivée était de 5 minutes, le serveur SERV peut augmenter ce temps à 120 minutes voire 12 heures, dès que le conducteur utilise la place. De manière alternative ou complémentaire, le serveur SERV peut également moduler à nouveau la tarification appliquée par le contrôleur concerné, par exemple en abaissant le tarif à 0,1 €/minute et/ou en rendant gratuit le stationnement pendant une période déterminée. C'est une autre manière de privilégier l'utilisation de véhicules permettant de réduire les embouteillages et la pollution et/ou de récompenser des conducteurs utilisant ce type de véhicule.

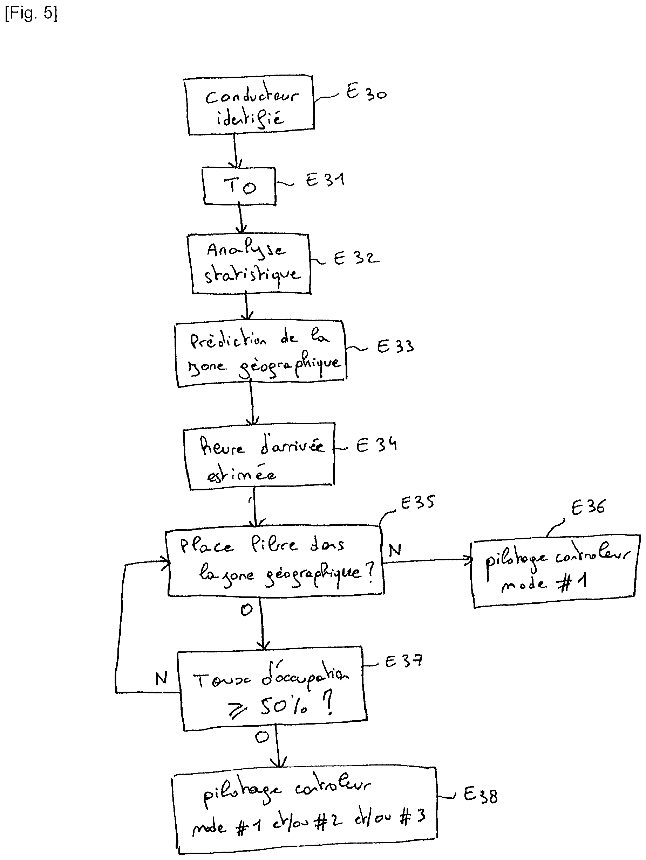

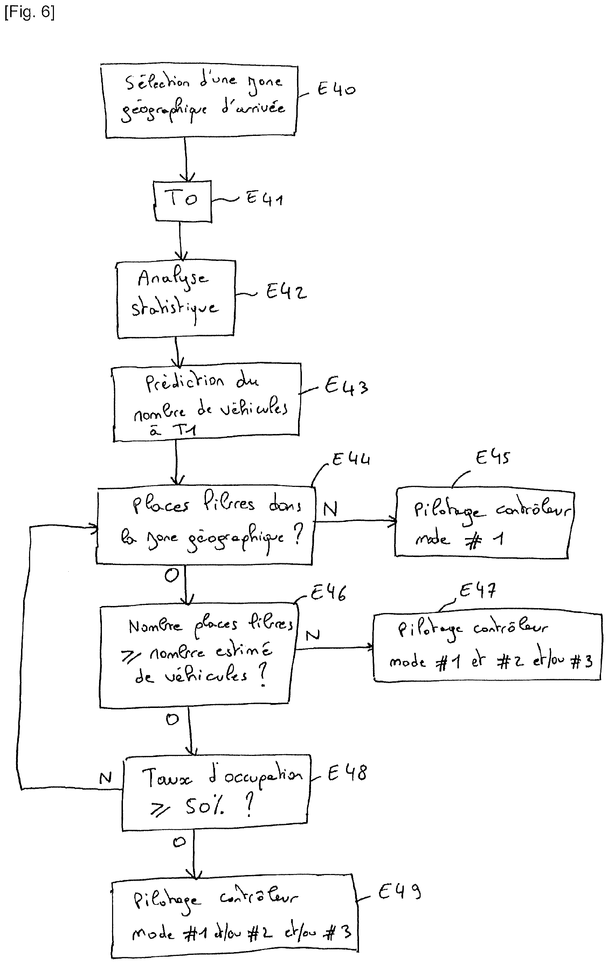

Différents exemples du procédé conforme à l'invention vont être maintenant décrits en références aux logigrammes des figures 5 et 6.

Sur la figure 5, le serveur SERV prend comme référence un conducteur identifié - ou un véhicule identifié - pour la mise en oeuvre du processus (E30). Le processus est par initié à T0, exemple dès que le conducteur utilise un véhicule d'une flotte de véhicule partagé et que ce dernier passe d'un statut « Indisponible à la réservation » à « Disponible à la réservation » (E31).

Le serveur SERV fait une analyse statistique (E32) des données historiques de navigation du conducteur pour prédire la zone géographique vers laquelle il va se diriger (E33).

Le serveur SERV détermine l'heure d'arrivée estimée du conducteur dans cette zone géographique d'arrivée (E34).

Le serveur SERV interroge la base de données BAS pour savoir si au moins une place est libre (non occupée et disponible) dans la zone d'arrivée (E35).

Si aucune place n'est libre (E36), le serveur SERV pilote le contrôleur pour que la première place qui se libère soit placée dans un statut « réservé » (mode #1). Si au moins une place est libre, le serveur SERV détermine le taux d'occupation de cette place (E37). Ce taux découle de l'analyse statistique des données historiques enregistrées dans la base BAS et qui sont relatives au statut de ladite place.

Si le taux d'occupation est inférieur à une valeur seuil (par exemple 50%), le serveur SERV peut reboucler le processus sur l'étape E35 d'interrogation de la base de données BAS pour connaître le nombre de places libres.

Si le taux d'occupation est supérieur ou égal à la valeur seuil, le serveur SERV pilote le contrôleur (E38) pour moduler le temps de stationnement autorisé alloué à la place libre (mode #2) et/ou moduler la tarification appliquée à ladite place (mode #3) et/ou mettre ladite place dans un statut « réservé » (mode #1).

Sur la figure 6, le serveur SERV prend comme référence une zone géographique d'arrivée identifiée (E40). Le processus est initié à T0 (E41), par exemple à une heure d'affluence caractéristique, notamment tous les jours ouvrés de la semaine, à 18h, à la sortie des bureaux. Il peut également s'agir d'un événement particulier, par exemple un concert, dans une salle de spectacle identifiée, un samedi soir à 21h.

Le serveur SERV fait une analyse statistique (E42) des données historiques de navigation de véhicules identifiés et/ou de conducteurs identifiés, de façon à prédire - estimer - un nombre de véhicules (E43) susceptibles de se rendre dans la zone d'arrivée à partir d'une heure d'arrivée T1, par exemple à partir de 18h30. Le serveur SERV interroge la base de données BAS (E44) pour savoir si des places sont libres (non occupées et disponibles) dans la zone d'arrivée.

Si aucune place n'est libre (E45), le serveur SERV pilote le contrôleur pour que chaque place qui se libère soit placée dans un statut « réservé » (mode #1). Cette modification du statut des places est réalisée jusqu'à ce que le nombre de places placées dans un statut « réservé » soit égal au nombre estimé de véhicules.

Si des places sont libres, le serveur SERV compare le nombre estimé de véhicules au nombre de places libres (E46).

Si le nombre de places libres est inférieur au nombre estimé de véhicules, le serveur SERV pilote le contrôleur (E47) pour moduler le temps de stationnement autorisé alloué auxdites places libres (mode #2) et/ou moduler la tarification appliquée auxdites places libres (mode #3) et/ou mettre lesdites places libres dans un statut « réservé » (mode #1). Le serveur SERV pilote également le contrôleur pour que chaque place qui se libère soit placée dans un statut « réservé » (mode #1).

Si le nombre de places libres est supérieur ou égal au nombre estimé de véhicules, le serveur SERV détermine le taux d'occupation de ces places libres (E48). Ce taux découle de l'analyse statistique des données historiques enregistrées dans la base BAS et qui sont relatives au statut desdites places. Si le taux d'occupation est inférieur à une valeur seuil (par exemple 50%), le serveur SERV peut reboucler le processus sur l'étape E44 d'interrogation de la base de données BAS pour connaître le nombre de places libres.

Si le taux d'occupation est supérieur ou égal à la valeur seuil, le serveur SERV pilote le contrôleur (E49) pour moduler le temps de stationnement autorisé alloué aux places libres (mode #2) et/ou moduler la tarification appliquée auxdites places libres (mode #3) et/ou mettre lesdites places libres dans un statut « réservé » (mode #1).

### Système

Selon un autre aspect, l'invention concerne en particulier un système composé d'au moins le serveur SERV configuré pour mettre en oeuvre le procédé de gestion de places de stationnement selon l'invention.

### Produit programme d'ordinateur

Selon encore un autre aspect, l'invention concerne un produit programme d'ordinateur comprenant des instructions de code pour l'exécution du procédé de gestion de places de stationnement selon l'invention, lorsqu'il est exécuté par une unité de traitement du serveur informatique SERV.

L'agencement des différents éléments et/ou moyens et/ou étapes de l'invention, dans les modes de réalisation décrits ci-dessus, ne doit pas être compris comme exigeant un tel agencement dans toutes les implémentations. Notamment, une ou plusieurs caractéristiques exposées seulement dans un mode de réalisation peuvent être combinées avec une ou plusieurs autres caractéristiques exposées seulement dans un autre mode de réalisation.

## Revendications

1. Procédé de gestion de places de stationnement (PL, PL₁-PL₄) pour véhicules, lesquelles places sont localisées dans une zone géographique (GEO, B₃, D₁, D₂, D₃) dans lequel :
- un contrôleur (CONT, CONT_{B1}, CONT_{D1}, CONT_{D2}, CONT_{D3}) associé aux places de stationnement alloue une ou plusieurs caractéristiques de stationnement auxdites places,
- des données historiques de navigation de véhicules (CAR, CAR₁-CAR₂) identifiés et/ou de conducteurs identifiés sont récoltées et stockées,
- un serveur informatique (SERV) fait une analyse statistique desdites données stockées pour anticiper le parcours des véhicules identifiés (CAR₁-CAR₂) et/ou des conducteurs identifiés et pour prédire l'utilisation des places (PL, PL₁-PL₄) par lesdits véhicules et/ou lesdits conducteurs à partir d'une heure d'arrivée estimée dans une zone géographique déterminée,
- le serveur informatique (SERV) génère et transmet au contrôleur des instructions pour modifier une ou plusieurs caractéristiques de stationnement selon un processus informatique logique initié par ledit serveur avant l'heure d'arrivée estimée,
dans lequel le serveur informatique (SERV) modifie la ou les caractéristiques de stationnement en fonction de la prédiction d'utilisation des places (PL, PL₁-PL₄), ledit processus informatique logique étant initié par le résultat de l'analyse statistique, avant ladite heure d'arrivée estimée, sans que lesdits conducteurs n'aient à faire une réservation préalable d'une place de stationnement,
**se caractérisant par le fait que ledit procédé** comprend les étapes suivantes :
- modification d'une ou plusieurs caractéristiques de stationnement si, avant l'heure d'arrivée estimée, une place (PL, PL₁-PL₄) est occupée par un véhicule non identifié et/ou un conducteur non identifié,
- modification différente de ladite ou lesdites caractéristiques si, à partir de l'heure d'arrivée estimée, ladite place (PL, PL₁-PL₄) est occupée par un véhicule identifié (CAR, CAR₁-CAR₂) et/ou un conducteur identifié.

2. Procédé selon la revendication 1, comprenant les étapes suivantes :
- récolte et stockage de données historiques d'occupation des places (PL, PL₁-PL₄),
- détermination d'un nombre de places libres faisant suite à la prédiction d'utilisation des places (PL, PL₁-PL₄),
- calcul d'un taux d'occupation desdites places libres, lequel calcul est basé sur une analyse statistique desdites données historiques stockées.

3. Procédé selon la revendication 2, comprenant une étape de sélection d'au moins une caractéristique de stationnement à modifier parmi plusieurs caractéristiques de stationnement allouée par le contrôleur (CONT, CONT_{B1}, CONT_{D1}, CONT_{D2}, CONT_{D3}), laquelle sélection dépend du taux d'occupation calculé.

4. Procédé selon l'une des revendications 2 ou 3, consistant à ne modifier la ou les caractéristiques de stationnement que si le taux d'occupation calculé est supérieur ou égal à une valeur seuil.

5. Procédé selon l'une des revendications précédentes, comprenant une étape de nouvelle modification d'au moins une caractéristique de stationnement allouée à une place de stationnement lorsque ladite place est utilisée par un véhicule (CAR, CAR₁-CAR₂) identifié et/ou un conducteur identifié.

6. Procédé selon l'une des revendications précédentes, dans lequel la modification de la caractéristique de stationnement consiste à moduler la durée du temps de stationnement autorisé alloué par le contrôleur (CONT, CONT_{B1}, CONT_{D1}, CONT_{D2}, CONT_{D3}) aux places (P, PL₁-PL₄).

7. Procédé selon l'une des revendications précédentes, dans lequel la modification de la caractéristique de stationnement consiste à moduler la tarification appliquée par le contrôleur (CONT, CONT_{B1}, CONT_{D1}, CONT_{D2}, CONT_{D3}) lors de l'utilisation des places (P, PL₁-PL₄).

8. Procédé selon l'une des revendications précédentes, dans lequel la modification de la caractéristique de stationnement consiste à placer les places (P, PL₁-PL₄) dans un statut « réservé ».

9. Procédé selon l'une des revendications précédentes, comprenant une ou plusieurs des étapes suivantes :
- l'heure d'arrivée estimée est estimée à partir d'une analyse statistique de positions géographiques historiques des véhicules (CAR, CAR₁-CAR₂) identifiés et/ou des conducteurs identifiés et/ou à partir d'une analyse statistique de données historiques des statuts des places de stationnement (PL, PL₁-PL₄),
- le processus informatique logique conduisant à la modification des caractéristiques de stationnement est initié 30 minutes ou 60 minutes avant l'heure d'arrivée estimée.

10. Procédé selon l'une des revendications précédentes, comprenant les étapes suivantes :
- modification d'une ou plusieurs caractéristiques de stationnement avant l'heure d'arrivée estimée,
- modification d'une autre ou plusieurs autres caractéristiques de stationnement à partir de l'heure d'arrivée estimée.

11. Système comprenant un serveur informatique (SERV) configurés pour mettre en oeuvre le procédé selon la revendication 1.

12. Produit programme d'ordinateur comprenant des instructions de code pour l'exécution d'un procédé selon la revendication 1, lorsqu'il est exécuté par une unité de traitement d'un serveur informatique (SERV).

## Patentansprüche

1. Verfahren zur Verwaltung von Parkplätzen (PL, PL₁ - PL₄) für Fahrzeuge, wobei sich die Plätze in einem geografischen Gebiet (GEO, B₃, D₁, D₂, D₃) befinden, wobei:
- ein Kontrolleur (CONT, CONT_{B1}, CONT_{D1}, CONT_{D2}, CONT_{D3}), der zu den Parkplätzen gehört, den Plätzen ein oder mehrere Parkmerkmale zuweist,
- Navigationsverlaufsdaten von identifizierten Fahrzeugen (CAR, CAR₁, CAR₂) und/oder identifizierten Fahrern erfasst und gespeichert werden,
- ein Datenverarbeitungsserver (SERV) eine statistische Analyse der gespeicherten Daten vornimmt, um den Weg der identifizierten Fahrzeuge (CAR₁-CAR₂) und/oder der identifizierten Fahrer vorauszusehen und um die Nutzung der Plätze (PL, PL₁-PL₄) durch die Fahrzeuge und/oder die Fahrer ab einer geschätzten Ankunftszeit in einem bestimmten geografischen Gebiet vorherzusagen,
- der Datenverarbeitungsserver (SERV) Anweisungen zum Ändern eines oder mehrerer Parkmerkmale nach einem logischen Datenverarbeitungsvorgang, der vom Server vor der geschätzten Ankunftszeit initiiert wird, erzeugt und an den Kontrolleur übermittelt,
wobei der Datenverarbeitungsserver (SERV) das oder die Parkmerkmale abhängig von der Vorhersage der Nutzung der Plätze (PL, PL₁-PL₄) ändert, wobei der logische Datenverarbeitungsvorgang durch das Ergebnis der statistischen Analyse vor der geschätzten Ankunftszeit initiiert wird, ohne dass die Fahrer eine vorherige Reservierung eines Parkplatzes vornehmen müssen,
**dadurch gekennzeichnet, dass** das Verfahren die folgenden Schritte umfasst:
- Ändern eines oder mehrerer Parkmerkmale, falls vor der geschätzten Ankunftszeit ein Platz (PL, PL₁-PL₄) durch ein nicht identifiziertes Fahrzeug und/oder einen nicht identifizierten Fahrer belegt ist,
- abweichendes Ändern des oder der Merkmale, falls ab der geschätzten Ankunftszeit der Platz (PL, PL₁-PL₄) durch ein identifiziertes Fahrzeug (CAR, CAR₁-CAR₂) und/oder einen identifizierten Fahrer belegt ist.

2. Verfahren nach Anspruch 1, das die folgenden Schritte umfasst:
- Erfassen und Speichern von Belegungsverlaufsdaten der Plätze (PL, PL₁-PL₄),
- Bestimmen einer Anzahl freier Plätze im Anschluss an das Vorhersagen der Nutzung der Plätze (PL, PL₁-PL₄),
- Berechnen einer Belegungsquote der freien Plätze, wobei das Berechnen auf einer statistischen Analyse der gespeicherten Verlaufsdaten beruht.

3. Verfahren nach Anspruch 2, das einen Schritt des Auswählens mindestens eines zu ändernden Parkmerkmals aus mehreren vom Kontrolleur (CONT, CONT_{B1}, CONT_{D1}, CONT_{D2}, CONT_{D3}) zugewiesenen Parkmerkmalen umfasst, wobei die Auswahl von der berechneten Belegungsquote abhängt.

4. Verfahren nach einem der Ansprüche 2 oder 3, das darin besteht, nur dann das oder die Parkmerkmale zu ändern, wenn die berechnete Belegungsquote größer oder gleich einem Schwellenwert ist.

5. Verfahren nach einem der vorhergehenden Ansprüche, das einen Schritt des erneuten Änderns mindestens eines Parkmerkmals, das einem Parkplatz zugewiesen wurde, umfasst, wenn der Platz von einem identifizierten Fahrzeug (CAR, CAR₁-CAR₂) und/oder einem identifizierten Fahrer genutzt wird.

6. Verfahren nach einem der vorhergehenden Ansprüche, wobei das Ändern des Parkmerkmals darin besteht, die genehmigte Dauer der Parkzeit anzupassen, die den Plätzen (PL, PL₁-PL₄) vom Kontrolleur (CONT, CONT_{B1}, CONT_{D1}, CONT_{D2}, CONT_{D3}) zugewiesen wurden.

7. Verfahren nach einem der vorhergehenden Ansprüche, wobei das Ändern des Parkmerkmals darin besteht, die Tarifgestaltung anzupassen, die bei der Nutzung der Plätze (PL, PL₁-PL₄) vom Kontrolleur (CONT, CONT_{B1}, CONT_{D1}, CONT_{D2}, CONT_{D3}) angewandt wird.

8. Verfahren nach einem der vorhergehenden Ansprüche, wobei das Ändern des Parkmerkmals darin besteht, die Plätze (PL, PL₁-PL₄) in einen "Reserviert"-Status zu versetzen.

9. Verfahren nach einem der vorhergehenden Ansprüche, das einen oder mehrere der folgenden Schritte umfasst:
- die Ankunftszeit wird auf Grundlage einer statistischen Analyse der vergangenen geografischen Positionen der identifizierten Fahrzeuge (CAR, CAR₁-CAR₂) und/oder der identifizierten Fahrer und/oder auf Grundlage einer statischen Analyse der Verlaufsdaten der Status der Parkplätze (PL, PL₁-PL₄) geschätzt,
- der logische Datenverarbeitungsvorgang, der zur Änderung der Parkmerkmale führt, wird 30 Minuten oder 60 Minuten vor der geschätzten Ankunftszeit initiiert.

10. Verfahren nach einem der vorhergehenden Ansprüche, das die folgenden Schritte umfasst:
- Ändern eines oder mehrerer Parkmerkmale vor der geschätzten Ankunftszeit,
- Ändern eines anderen oder mehrerer anderer Parkmerkmale ab der geschätzten Ankunftszeit.

11. System, das einen Datenverarbeitungsserver (SERV) umfasst, der dazu konfiguriert ist, das Verfahren nach Anspruch 1 durchzuführen.

12. Computerprogrammprodukt, das Codeanweisungen zur Ausführung eines Verfahrens nach Anspruch 1 umfasst, wenn es durch eine Verarbeitungseinheit eines Datenverarbeitungsservers (SERV) ausgeführt wird.

## Claims

1. Method for managing parking spaces (PL, PL₂-PL₄) for vehicles, which spaces are located in a geographical zone (GEO, B₃, D₁, D₂, D₃), wherein:
- a controller (CONT, CONT_{B1}, CONT_{D1}, CONT_{D2}, CONT_{D3}) associated with the parking spaces allocates one or more parking features to said spaces,
- historical navigation data of identified vehicles (CAR, CAR₁-CAR₂) and/or of identified drivers are gathered and stored,
- a computing server (SERV) does a statistical analysis of said stored data in order to anticipate the route of the identified vehicles (CAR₁-CAR₂) and/or of the identified drivers and in order to predict the use of the spaces (PL, PL₂-PL₄) by said vehicles and/or said drivers from an estimated time of arrival in a determined geographical zone,
- the computing server (SERV) generates and transmits, to the controller, instructions for modifying one or more parking features according to a logical computing process initiated by said server before the estimated time of arrival,
wherein the computing server (SERV) modifies the one or more parking features in accordance with the prediction of the use of the spaces (PL, PL₂-PL₄), said logical computing process being initiated by the result of the statistical analysis, before said estimated time of arrival, without said drivers having to make a prior reservation of a parking space,
**characterized in that said method** comprises the following steps:
- modifying one or more parking features if, before the estimated time of arrival, a space (PL, PL₂-PL₄) is occupied by an unidentified vehicle and/or an unidentified driver,
- modifying said one or more features differently if, from the estimated time of arrival, said space (PL, PL₁-PL₄) is occupied by an identified vehicle (CAR, CAR₁-CAR₂) and/or an identified driver.

2. Method according to Claim 1, comprising the following steps:
- gathering and storing historical occupation data of the spaces (PL, PL₂-PL₄),
- determining a number of free spaces after the use of the spaces (PL, PL₂-PL₄) is predicted,
- calculating an occupation rate of said free spaces, which calculation is based on a statistical analysis of said stored historical data.

3. Method according to Claim 2, comprising a step of selecting at least one parking feature to be modified among several parking features allocated by the controller (CONT, CONT_{B1}, CONT_{D1}, CONT_{D2}, CONT_{D3}), which selection depends on the calculated occupation rate.

4. Method according to one of Claims 2 and 3, consisting in modifying the parking features only if the calculated occupation rate is greater than or equal to a threshold value.

5. Method according to one of the preceding claims, comprising a step of once more modifying at least one parking feature allocated to a parking space when said space is used by an identified vehicle (CAR, CAR₁-CAR₂) and/or an identified driver.

6. Method according to one of the preceding claims, wherein modifying the parking feature consists in modulating the duration of the authorized parking time allocated by the controller (CONT, CONT_{B1}, CONT_{D1}, CONT_{D2}, CONT_{D3}) to the spaces (P, PL₁-PL₄).

7. Method according to one of the preceding claims, wherein modifying the parking feature consists in modulating the pricing applied by the controller (CONT, CONT_{B1}, CONT_{D1}, CONT_{D2}, CONT_{D3}) when the spaces (P, PL₂-PL₄) are used.

8. Method according to one of the preceding claims, wherein modifying the parking feature consists in placing the spaces (P, PL₁-PL₄) in a "reserved" status.

9. Method according to one of the preceding claims, comprising one or more of the following steps:
- the estimated time of arrival is estimated from a statistical analysis of historical geographical positions of the identified vehicles (CAR, CAR₁-CAR₂) and/or of the identified drivers and/or from a statistical analysis of the historical data on the statuses of the parking spaces (PL, PL₁-PL₄),
- the logical computing process leading to the modification of the parking features is initiated 30 minutes or 60 minutes before the estimated time of arrival.

10. Method according to one of the preceding claims, comprising the following steps:
- modifying one or more parking features before the estimated time of arrival,
- modifying one or more other parking features from the estimated time of arrival.

11. System comprising a computing server (SERV) configured to implement the method according to Claim 1.

12. Computer program product comprising code instructions for executing a method according to Claim 1, when it is executed by a processing unit of a computing server (SERV).
